# EUROPEAN PATENT APPLICATION

(11) **EP 4 679 734 A1**
(43) Date of publication of application: **14.01.2026**
(21) Application number: 24188124.2
(22) Date of filing: 11.07.2024
(51) Int. Cl.: H04B 10/80, H04B 10/272, H04Q 11/00

(54) **OPTICAL APPARATUS COMPRISING INPUT AND OUTPUT PORTS AND ONE OR MORE ENERGY HARVESTERS**

(71) Applicant: Nokia Solutions and Networks Oy, 02610 Espoo (FI)
(72) Inventor: Breyne, Laurens, 8770 Ingelmunster (BE); Straub, Michael, 75433 Maulbronn (DE)
(74) Representative: Smith, Robert Andrew

(57) **Abstract**

An optical apparatus comprising a first input port, two or more output ports, one or more energy harvesters, and one or more optical components and a method for operating said optical apparatus are described, the method comprising: operating in a first mode comprising: harvesting using the one or more energy harvesters a first fraction of light input to the first input port; and directing a second fraction of light input to the first input port to the two or more output ports; and operating in a second mode, wherein the first fraction when operating in the first mode is bigger than the first fraction when operating in the second mode; and the second fraction when operating in the first mode is smaller than the second fraction when operating in the second mode.

## Description

### Field

Example embodiments may relate to optical apparatuses and methods for operating optical apparatuses.

### Background

Passive optical networks connect a plurality of optical network units to a network via an optical line terminal. There remains a need to provide passive optical networks having higher reliability and energy efficiency, and a lower cost.

### Summary

The scope of protection sought for various embodiments of the invention is set out by the independent claims. The embodiments and features, if any, described in this specification that do not fall under the scope of the independent claims are to be interpreted as examples useful for understanding various embodiments of the invention.

A first aspect provides an optical apparatus comprising a first input port, two or more output ports, one or more energy harvesters, and one or more optical components, the one or more optical components being configured to: direct a first fraction of light input to the first input port to the one or more energy harvesters, wherein the one or more energy harvesters are configured to harvest energy directed to the energy harvesters by the one or more optical components; direct a second fraction of light input to the first input port to the two or more output ports; operate in a first mode; and operate in a second mode, wherein: the first fraction when operating in the first mode is bigger than the first fraction when operating in the second mode; and the second fraction when operating in the first mode is smaller than the second fraction when operating in the second mode.

In some examples: the two or more output ports comprise at least a first output port and a second output port; the second fraction of light input to the first input port comprises at least a third and fourth fraction of light input to the first input port; and the one or more optical components are configured to: direct the third fraction of light input to the first input port to the first output port; and direct the fourth fraction of light input to the first input port to the second output port, wherein the fourth fraction when operating in the first mode is smaller than the fourth fraction when operating in the second mode. In some examples, at least when operating in the second mode, the third fraction is different from the fourth fraction.

In some examples, the optical apparatus further comprises a second input port, wherein the one or more optical components are further configured to: direct a fifth fraction of light input to the second input port to the one or more energy harvesters; direct a sixth fraction of light input to the second input port to the two or more output ports; operate in a third mode; and operate in a fourth mode, wherein: wherein the fifth fraction when operating in the third mode is bigger than the fifth fraction when operating in the fourth mode; and wherein the sixth fraction when operating in the third mode is smaller than the sixth fraction when operating in the fourth mode. In some examples, the sixth fraction of light input to the second input port comprises at least a seventh and eighth fraction of light input to the second input port, and the one or more optical components are configured to: direct the seventh fraction of light input to the second input port to the first output port, wherein the seventh fraction when operating in the third mode is smaller than the seventh fraction when operating in the fourth mode; and direct the eighth fraction of light input to the second input port to the second output port. In some examples, at least when operating in the fourth mode, the seventh fraction is different from the eighth fraction.

In some examples, the one or more optical components are configured to operate in one or more of: the first mode and the third mode; the first mode and the fourth mode; and the second mode and the third mode. In some examples, the one or more optical components are configured to: switch between: operating in the first mode and the third mode; and operating in the first mode and the fourth mode; switch between: operating in the first mode and the third mode; and operating in the second mode and the third mode; or switch between: operating in the first mode and the third mode; operating in the first mode and the fourth mode; and operating in the second mode and the third mode. In some examples the optical apparatus comprises a receiver configured to receive one or more control signals, and the one or more optical components are configured to perform the switching responsive to receiving the one or more control signals.

In some embodiments the optical apparatus comprises: one or more sensors configured to obtain an indication of the intensity of the light input to the first input port; and one or more sensors configured to obtain an indication of the intensity of the light input to the second input port, wherein the one or more optical components are configured to: responsive to obtaining an indication that the intensity of the light input to the first input port has decreased below a threshold, switch from operating in the first mode and third mode to operating in the first mode and fourth mode, and responsive to obtaining an indication that the intensity of the light input to the second input port has decreased below a threshold, switch from operating in the first mode and third mode to operating in the second mode and third mode.

In some embodiments, the one or more optical components are configured to: responsive to obtaining an indication that the intensity of the light input to the first input port has increased above a threshold, switch from operating in the first mode and fourth mode to operating in the first mode and third mode, and responsive to obtaining an indication that the intensity of the light input to the second input port has increased above a threshold, switch from operating in the second mode and third mode to operating in the first mode and third mode.

In some embodiments the one or more energy harvesters comprise first and second energy harvesters, wherein the first energy harvester is configured to harvest energy from the first input port in at least the first mode and the second energy harvester is configured to harvest energy from the second input port in at least the third mode, and wherein the one or more sensors comprise a first sensor configured to determine an intensity of light input to the first input port from an amount of energy harvested by the first energy harvester, and a second sensor configured to determine an intensity of light input to the second input port from an amount of energy harvested by the second energy harvester.

In some embodiments the one or more optical components comprise at least one optical splitter and at least one optical switch, wherein the optical splitter has at least one input and at least two outputs, wherein the first input port is optically coupled the input of the optical splitter, and wherein the optical switch optically couples a controllable number of outputs of the optical splitter to the one or more harvesters and two or more output ports to control the size of the first and second fractions.

In some embodiments the one or more optical components comprise at least one variable optical splitter, wherein the variable optical splitter has at least one input and at least two outputs, and the fraction of light input to the input that is output to respective outputs is controllable, wherein the first input port is optically coupled to the variable optical splitter input, and wherein variable optical splitter outputs are optically coupled to the one or more harvesters and two or more output ports to control the size of the first and second fractions by controlling the variable optical splitter.

A second aspect provides a method of operating an optical apparatus, the optical apparatus comprising a first input port, two or more output ports, one or more energy harvesters, and one or more optical components, the method comprising: operating in a first mode comprising: harvesting using the one or more energy harvesters a first fraction of light input to the first input port; and directing a second fraction of light input to the first input port to the two or more output ports; and operating in a second mode, wherein the first fraction when operating in the first mode is bigger than the first fraction when operating in the second mode; and the second fraction when operating in the first mode is smaller than the second fraction when operating in the second mode.

In some examples: the two or more output ports comprise at least a first output port and a second output port; the second fraction of light input to the first input port comprises at least a third and fourth fraction of light input to the first input port; and operating in the first mode further comprises: directing the third fraction of light input to the first input port to the first output port; and directing the fourth fraction of light input to the first input port to the second output port, wherein the fourth fraction when operating in the first mode is smaller than the fourth fraction when operating in the second mode. In some examples, at least when operating in the second mode, the third fraction is different from the fourth fraction.

In some examples, the optical apparatus further comprises a second input port, and the method further comprises operating in a third mode comprising: directing a fifth fraction of light input to the second input port to the one or more energy harvesters; directing a sixth fraction of light input to the second input port to the two or more output ports; and operating in a fourth mode, wherein the fifth fraction when operating in the third mode is bigger than the fifth fraction when operating in the fourth mode; and wherein the sixth fraction when operating in the third mode is smaller than the sixth fraction when operating in the fourth mode. In some examples, the sixth fraction of light input to the second input port comprises at least a seventh and eighth fraction of light input to the second input port, and operating in the third mode further comprises: directing the seventh fraction of light input to the second input port to the first output port and directing the eighth fraction of light input to the second input port to the second output port, wherein the seventh fraction when operating in the third mode is smaller than the seventh fraction when operating in the fourth mode. In some examples, at least when operating in the fourth mode, the seventh fraction is different from the eighth fraction.

In some examples, the method comprises operating in one or more of: the first mode and the third mode; the first mode and the fourth mode; and the second mode and the third mode. The method comprises at least one of: switching between: operating in the first mode and the third mode; and operating in the first mode and the fourth mode; switching between: operating in the first mode and the third mode; and operating in the second mode and the third mode; and switching between: operating in the first mode and the third mode; operating in the first mode and the fourth mode; and operating in the second mode and the third mode. In some examples the method comprises receiving one or more control signals, and performing the switching responsive to receiving the one or more control signals.

In some embodiments the method further comprises: obtaining at one or more sensors an indication of the intensity of the light input to the first input port; obtaining at one or more sensors an indication of the intensity of the light input to the second input port; responsive to obtaining an indication that the intensity of the light input to the first input port has decreased below a threshold, switching from operating in the first mode and third mode to operating in the first mode and fourth mode; and responsive to obtaining an indication that the intensity of the light input to the second input port has decreased below a threshold, switching from operating in the first mode and third mode to operating in the second mode and third mode.

In some embodiments, the method further comprises: responsive to obtaining an indication that the intensity of the light input to the first input port has increased above a threshold, switching from operating in the first mode and fourth mode to operating in the first mode and third mode, and responsive to obtaining an indication that the intensity of the light input to the second input port has increased above a threshold, switching from operating in the second mode and third mode to operating in the first mode and third mode.

### Brief Description of the Drawings

Example embodiments will now be described by way of non-limiting example, with reference to the accompanying drawings, in which:
FIG. 1 is a schematic diagram showing an example topology of a passive optical network (PON) system;
FIGS. 2-4 are schematic diagrams of PONs;
FIGS. 5 and 6 are schematic diagrams of optical apparatuses in accordance with example embodiments;
FIGS. 7 and 8 are block diagrams of methods in accordance with example embodiments;
FIGS. 9, 9A, 9B, and 9C are schematic diagrams of a switch module in accordance with example embodiments;
FIGS. 10A, 10B, and 10C are graphs illustrating energy stored and power dissipated by the example switch module of FIG. 9;
FIG. 11 is a schematic diagram of a PON implementing a "type-B" protection scheme;
FIG. 12A is a schematic diagram of switch module in accordance with example embodiments;
FIG. 12B is a schematic diagram of a monitor module of the switch module of FIG. 12A;
FIGS. 13, 14A, and 14B are a schematic diagrams illustrating switch modules in accordance with example embodiments;
FIG. 15 is a block diagram of components of a system in accordance with an example embodiment; and
FIG. 16 shows an example of tangible media for storing computer-readable code which when run by a computer may perform methods according to example embodiments described above.

### Detailed Description

Passive optical networks (PONs) provide broadband access (i.e., high speed network connection, but not necessarily over a wide frequency band). They have a point-to-multipoint (P2MP) topology, in which one optical line terminal (OLT) at the network side is used to connect to a plurality (e.g., up to 64) of optical network units (ONUs) at the user side by means of an optical distribution network (ODN) or fibre plant that contains optical fibers and splitters, but typically contains no active components (e.g., no amplifiers).

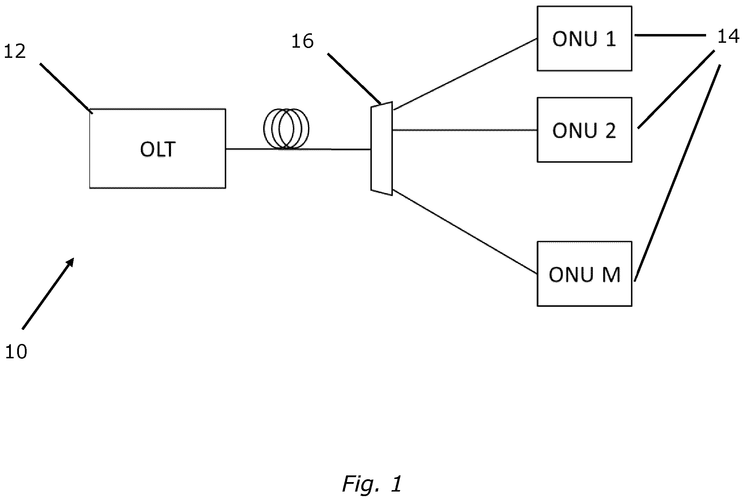

FIG. 1 is a schematic diagram showing an example topology of a PON system, designated generally by reference numeral 10. PON system 10 comprises OLT 12, a plurality of ONUs 14 served by OLT 12, and splitter 16 coupling each of the plurality of ONUs 14 to one output of OLT 12.

Most PON technologies such as G-PON, E-PON, XG(S)-PON, 25GS-PON, and 50G PON are time-division multiplexing (TDM) PON technologies, in which the fiber medium is shared in time between the different ONUs. Also, time- and wavelength-division multiplexing (TWDM) PON technologies exist, such as NG-PON2, in which multiple TDM systems at different wavelengths are stacked on the same PON system. Aspects of the present disclosure apply to both TDM and TWDM PON systems.

Historically, there has been a push to scale towards higher datarates and longer reaches, as reflected in various standardized PON technologies. Scaling to higher datarates may be accompanied by an increase in power consumption.

Several methods for lowering power consumption may be used, ranging from powering down unused equipment, to scaling the power consumption with the traffic load on the PON network. Longer time intervals with low traffic may be ideal to decrease the power consumption of a PON network. Scaling can be implemented within the confinements of a single PON network, both at the OLT and ONU side. Since most operators manage multiple PON networks from a single central office (CO), efficient scaling can also be implemented over different PON networks by combining multiple ODNs. This may result in larger power savings as hardware may be reused for different PON networks. Consequentially, certain PON functionalities could be temporarily powered down.

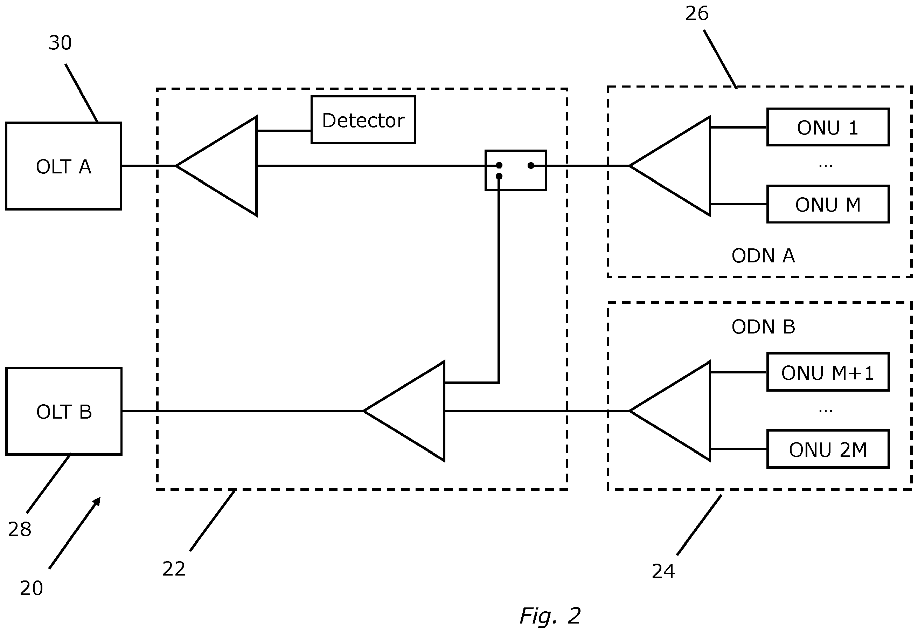

FIG. 2 is a schematic diagram of a PON designated generally by reference numeral 20. PON 20 comprises system 22, ODN A 26, ODN B 24, OLT A 30 and OLT B 28.

System 22 may combine multiple ODNs to a single OLT. In normal operation, OLT A 30 and OLT B 28 are both enabled and service ODN A 26 (comprising M ONUs) and ODN B 24 (also comprising M ONUs) respectively. If the OLT on Port A is disabled, a detector of system 22 (e.g. a photodetector) detects that there is no downstream power anymore and an optical switch reacts such that ODN A 26 is connected to OLT B. Both ODNs are then serviced by OLT B. One benefit of this system is that it can be autonomous and can be added in between existing OLTs and ODNs. When traffic is low, OLT A can be disabled and the switch may automatically reconfigure.

System 22 may be generalised further to a system that uses the minimum number of OLTs required to support a certain volume of traffic. This system may calculate the total network traffic volume, determine the minimum number of OLTs required to support this volume and configure a traffic control switch to route and combine the traffic to this minimum number of OLTs. Unused OLTs may be disabled to save power. Furthermore, in case of a failure at the OLT side, using a traffic control switch allows the avoidance of a service outage by rerouting or combining the traffic associated with that failing OLT to another OLT.

The above description of system 22 does not address how the necessary power for the operation of system 22 can be delivered to the system (e.g., containing splitters, switch, monitor, controller...). If system 22 is co-located with the OLTs in the central office, then power can be readily supplied. However, it may be of interest to place the module in the field, especially if system 22 is used for protection switching, as only a field module can protect against failure in the feeder fiber. However, this requires a mechanism to provide power to such a remote switch module.

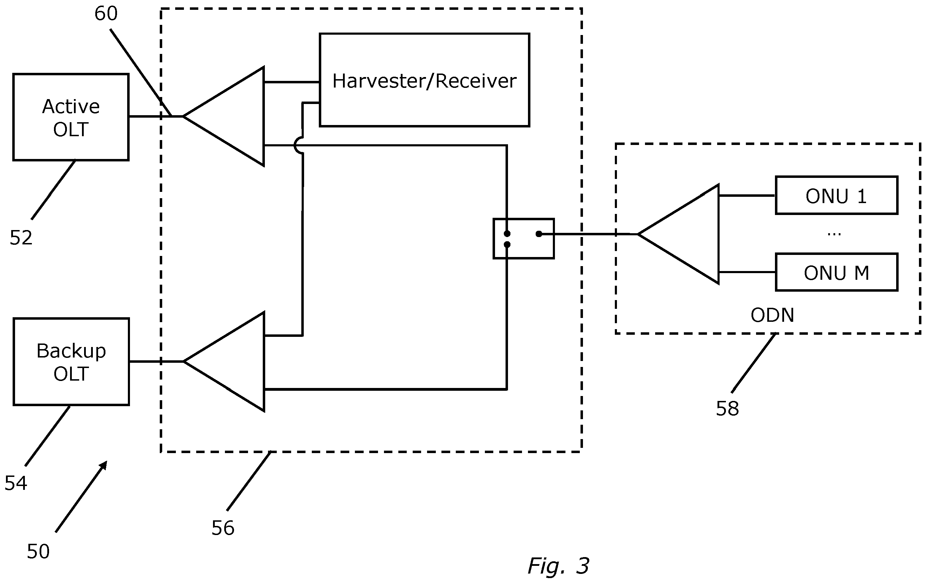

FIG. 3 is a schematic diagram of a PON designated generally by reference numeral 50. PON 50 comprises active OLT 52, backup OLT 54, remote switch 56, and ODN 58.

PON 50 can perform protection switching while remote switch 56 is placed in the field. During normal operation, active OLT 52 services the ODN 58 while backup OLT 54 is in standby, remote switch 56 connects ODN 58 to active OLT 52. In case of a failure, either at OLT 52 or in feeder 60 connecting OLT 52 to remote switch 56, backup OLT 54 signals remote switch 56 to connect ODN 58 to OLT 54. Communication between active and backup OLTs and the remote switch 56 takes place over a separate wavelength over the feeder fibers, provided by communication lasers within OLTs 54 and 56. In order to provide power to the remote switch, the communication laser is enabled, and optical power incident on a harvester/receiver is harvested and stored to power the switch. This protection mechanism is similar to protection type-B, in which 2 OLTs (one active and one standby) are connected to the PON using a 2xM splitter. The M outputs are connected to the ONU, while the 2 inputs each go to an OLT over a different feeder fiber.

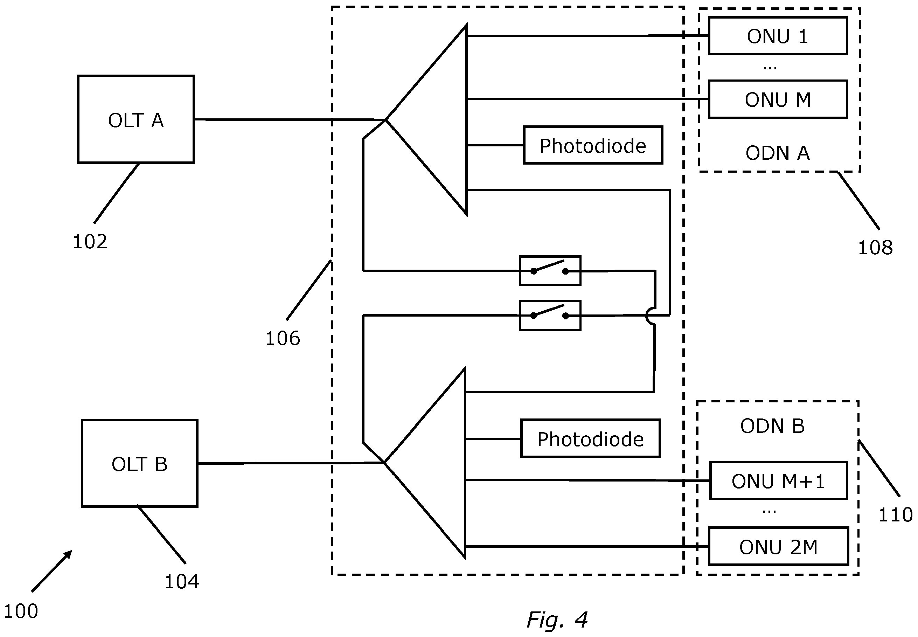

FIG. 4 is a schematic diagram of a PON designated generally by reference numeral 100. PON 400 comprises OLT A 102, OLT B 104, switch module 106, ODN A 108, and ODN B 110.

PON 100 combines multiple ODNs on a single OLT if the other OLT fails. In normal circumstances, ODN A 108 is serviced by OLT A 102 and ONU B 110 is serviced by OLT B 104. If a fault occurs on OLT A or the feeder fiber from OLT A, then the photodiode detects a loss of downstream power from OLT A and triggers the switch to connect ODN A to OLT B. During normal operation, there is always part of the downstream optical signal incident on the photodiode. This light is harvested using an energy harvester circuit and stored on a capacitor. When a fault is detected, the energy in the capacitor is used to power the switch. This scheme avoids the need for a separate wavelength to power the remote switch, at the cost of using some of the useable downstream signal. One port of the splitter, i.e. a certain amount of optical power is always routed to the photodiode.

A switching module may have one or more of the following properties:
- Ability to combine ODNs to a single OLT to save power at low traffic loads;
- Ability to combine ODNs to any OLT to allow protection switching;
- Autonomous detection of signal loss to allow protection switching;
- Low-complexity remote power harvesting with minimal impact on the signal; and
- Minimal insertion loss as the module is part of the ODN.

System 22 of PON 20 can combine PONs to a single OLT and can perform autonomous detection. However, both ODNs can only be combined to OLT B, such that effective protection switching is not possible. However, the switching module and controller are co-located in the CO. Protection switching is thus limited to OLT failure. Implementations in the field are not discussed, and the same holds for remote powering.

PON 50 switches an ODN to a standby OLT in case the active OLT or feeder fiber fails, similar to Protection-type B. After a failure, the full PON service is restored since the standby OLT takes over. In PON 20, ODNs are combined together on a single OLT after a failure, such that the OLT throughput is shared among multiple ODNs. While this seems disadvantageous, compared to PON 50, combining ODNs is a more power and cost-efficient protection mechanism as no additional standby resource with the associated costs (purchase, power, maintenance) is required. In PON 50, communication and remote power is provided to the remote switch through a separate laser. While this may have no impact on the signal, it not only requires an energy harvesting circuit in the switch module but also a laser in the CO, which raises the cost and complexity.

PON 100 can combine ODNs and perform protection switching, autonomous detection of the downstream signal and remote power harvesting. Using a photodiode both to monitor the downstream signal of an OLT as well as to harvest downstream power results in a simple energy harvesting mechanism. Two 2xM splitters are used, each connecting to an ODN, a monitoring harvesting photodiode, and the other splitter (via a switch). The split ratio M for a typical PON system can be high (M=32,64), such that there is very limited power available for the energy harvesting. Furthermore, in combined mode, the signal to one of the ODNs has to pass through two 2xM splitters, causing excessive loss. The monitor photodiode and the connection to the other ODN consumes 2 outputs of the 2xM splitter such that only M-2 ONUs can be connected.

PONs 20, 50, and 100 therefore do not comprise switching modules having the desired properties set out above.

Optical switching can be leveraged to reduce the power consumption of a system in two ways:
- Combining two ODNs to a single OLT when the traffic load is low on all PONs: this allows unused OLTs to be disabled to save power; and
- Combining two ODNs to a single OLT when the other OLT or feeder fiber fails. This protection switching is more power and cost efficient compared to existing protection mechanisms that rely on a standby OLT. The drawback is that the throughput has to be shared over both ODNs.

These functionalities can be combined into a single switching module. To protect both against OLT and feeder fiber failure, the switching module may be placed in the field co-located where the feeder is split and routed to the ONUs. As in some deployments no electrical power source is available in the field to power the operations of the switch module, remote power solutions may be desirable. One possible way is to send light through the feeder fiber at a different wavelength, so that this light can be harvested at the switch and the energy can be stored for a later switching event. However, this requires an additional laser at the OLT side.

To monitor whether there is still a signal from the OLTs, the switching module may contain a monitor photodiode. This may allow autonomous operation of the switch. The downstream optical signal power incident on this PD can be harvested and stored. A trade-off exists however: there should be sufficient downstream power tapped to harvest, power the switch and perform reliable monitoring, but tapping more downstream signal increases the insertion loss of the switching module.

Aspects of this disclosure describe a switching module with the following properties:
- Combining ODNs to a single OLT to save power at low traffic loads
- Combining ODNs to any OLT to allow protection switching
- Autonomous detection of signal loss to allow protection switching
- Efficient energy harvesting with minimal loss on the downstream signal
- Minimal insertion loss as the module is inserted in the ODN

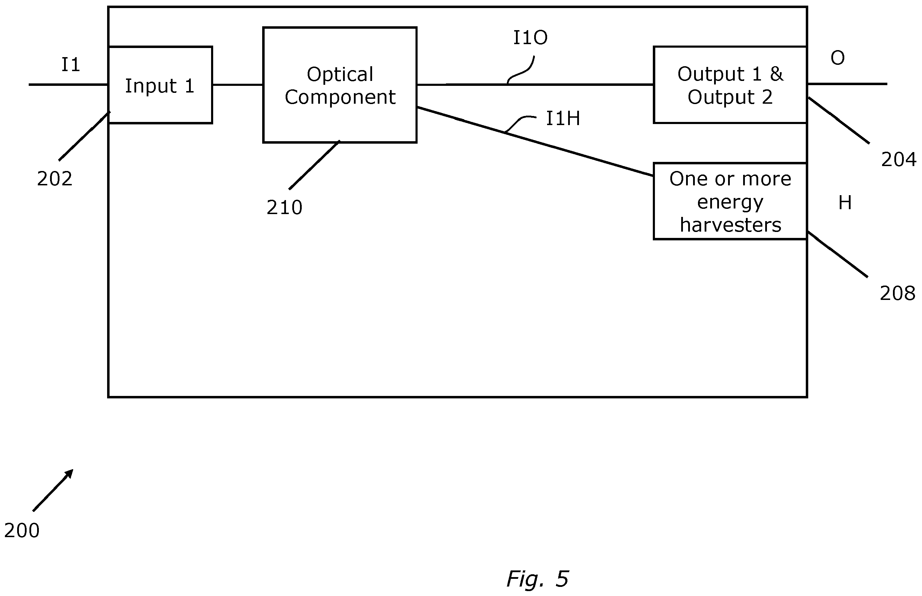

FIG. 5 is a schematic diagram of an optical apparatus in accordance with example embodiments, designated generally by the reference numeral 200. Optical apparatus 200 has a first input port 202, first and second output ports 204, one or more energy harvesters 208, and one or more optical components 210.

Input port 202 may be configured to receive input light I1, for example from an OLT via a feeder fiber. The one or more optical components 210 are configured to direct fractions of input light I1 to the first and second output ports 204 (or more generally two or more output ports) and the one or more energy harvesters 208. The one or more energy harvesters are configured to harvest energy from light directed towards the one or more energy harvesters.

Light directed to the one or more output ports may leave the output ports, for example, into respective ODNs. Optical apparatus 200 may therefore form part of a passive optical network facilitating communication between one or more OLTs coupled to input port 202 and one or more ONUs coupled to the one or more of the two or more output ports. Each output port may have multiple ONUs connected to it.

The optical components are configured to operate in first and second modes. The fraction of input light I1 directed to the one or more energy harvesters, I1H, or the "first fraction", is larger when operating in the first mode than the second mode. In contrast, the fraction of input light I1 directed to the two or more output ports, I1O, or the "second fraction" is smaller when operating in the first mode than the second mode. This way, depending on the requirements of the "downstream" components, the fraction of input energy that is harvested can be varied. This allows a larger fraction of the intensity of input light to be harvested when excess light may otherwise be available, while reducing the amount of energy harvested when preserving intensity to the two or more output ports is critical.

In one example embodiment, the optical components in the first mode direct 50% of input light I1 to the energy harvester, and 50% of input light I1 to the two or more output ports, and the optical components in the second mode direct no input light I1 to the energy harvester, and 100% of input light I1 to the two or more output ports in the second mode. The aforementioned percentages are fractions of the intensity of input light, and do not account for attenuation or other losses within the optical apparatus (other than to energy harvesting).

This varying of the fraction of harvested and output energy may be applied to PON 20. For example, when the ODNs of PON 20 are not combined to one OLT, light of OLT B that would otherwise be directed to ODN A is effectively "unused", and harvesting said light may allow the optical apparatus to be powered remotely.

In some example embodiments, the optical components comprise one or more optical splitters and one or more optical switches. For example, the one or more optical splitters may divide input light I1 into portions at two or more splitter output ports, and the one or more optical switches may control the number of splitter output ports coupled to the two or more output ports and the one or more energy harvesters to control the fraction of input light directed to each. Additionally or alternatively, the optical splitters may be variable optical splitters. The split ratio of the optical splitters may be controlled to control the fraction of input light directed to each of the two or more outputs, and/or the fraction of input light directed to the one or more energy harvesters. Additionally or alternatively, variable optical splitters may be used in combination with optical switches and/or non-variable optical splitters. Additionally or alternatively, the fractions of input light directed to each of the two or more outputs can change over time.

The energy harvester may comprise a photodiode, or another component suitable for generating usable energy from harvested light. The energy harvester may comprise or be coupled to an energy storage device, such as a capacitor or battery, for storing harvested energy.

The energy harvester may provide power to optical components 210, to power switching of optical components (e.g., from the first mode to the second mode).

In some embodiments the energy harvester comprises a detector, such as a photodetector, for determining the intensity of light input to the energy harvester from all inputs or particular inputs. In some embodiments this detector also harvests energy (e.g., the detector may be an energy harvesting photodiode).

The energy harvester may comprise a controller for controlling the mode in which the optical components operate. The controller may in some embodiments comprise a processor and memory. In some embodiments the controller may comprise simple logic, without the need for a memory. In some embodiments the controller may be configured to change the mode of the optical components responsive to the intensity of light detected from an input. In some embodiments the controller may be configured to change the mode of the optical components responsive to an external signal that may be provided for example by the OLT or the operator.

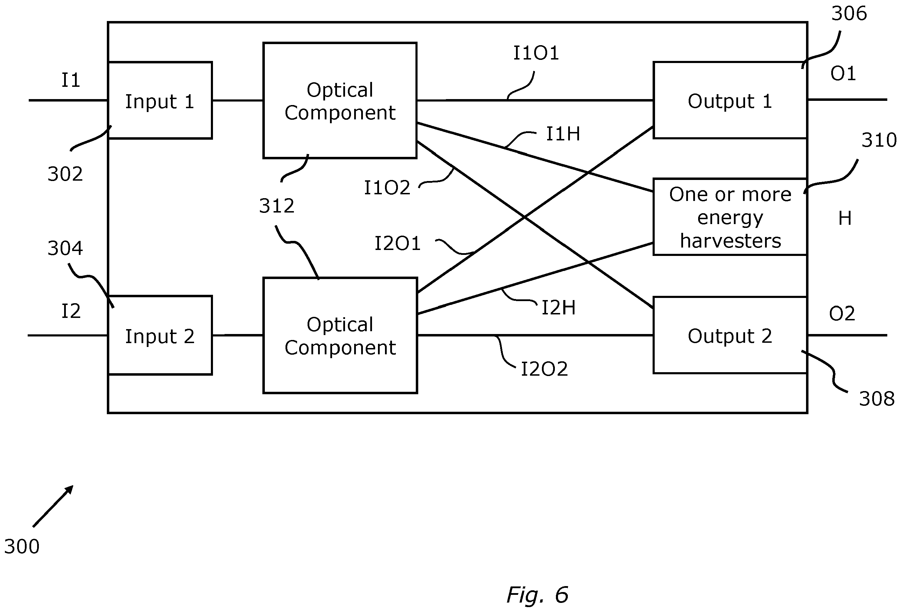

FIG. 6 is a schematic diagram of an optical apparatus in accordance with example embodiments, designated generally by the reference numeral 300. Optical apparatus 300 has a first input port 302, a second input port 304, a first output port 306, a second output port 308, one or more energy harvesters 310, and one or more optical components 312.

Similar to apparatus 200, first input port 302 may be configured to receive input light I1, for example from a first OLT via a feeder fiber. Second input port 304 may be configured to receive input light I2, for example from a second OLT via a feeder fiber.

The one or more optical components 312 are configured to direct fractions of input light I1 and input light I2 to the first output port 306, second output port 308 and the one or more energy harvesters 310. The one or more energy harvesters are configured to harvest energy from light directed towards the one or more energy harvesters.

Light directed to first output port 306 may leave that output port, for example, into a first ODN. Light directed to the second output port 308 may leave that output port, for example, into a second ODN. Optical apparatus 300 may therefore form part of a passive optical network facilitating communication between a first OLT coupled to first input port 302, a second OLT coupled to second input port 304, and ONUs of first and second ODNs coupled to first and second output ports 306, 308 respectively.

The optical components 312 are configured to operate in first and second modes. Optical components 312 are configured to direct a fraction, I1H, of input light I1 into the energy harvester 310, and optical components 312 are configured such that this fraction is smaller in the second mode than the first mode. Conversely, optical components 312 are configured to direct a fraction, I1O, of input light I1 to the first and second output ports (i.e., fraction I1O is shared across the first and second output ports), and optical components 312 are configured such that this fraction is larger in the second mode than the first mode. In some embodiments, the fraction, I1O1, of light I1 that is directed to the first output port in particular is increased in the second mode, or the fraction, I1O2, of light I1 that is directed to the second output port in particular is increased in the second mode. For example, an increase in light I1 directed towards an ODN coupled to a particular output port may be desirable in certain circumstances (e.g., because both ODNs are to be combined onto an OLT coupled to input port 1 because an OLT coupled to input port 2 has failed or is shut down for energy savings).

In some embodiments, optical components 312 may be configured to direct at least a fraction I2O2 of light I2 input to the second input port 304 to the second output port in at least one mode of operation, and optical components 312 may be switched from operating in the first mode to operating in the second mode in response to determining that the light I2 input to the second input port has dropped below an intensity threshold. Changing from the first mode to the second mode may decrease the fraction I1H of light I1 harvested (in some examples to zero), and increase the fraction I1O2 of light I1 directed to the second output port (in some examples from zero), so that an OLT coupled to the first input port 302 may serve an ODN coupled to the second output port.

I1O1 and I1O2 may be different in one or both of the first and second modes (e.g., because the number of ONUs coupled to the first and second output ports is different, making an uneven division of input light preferable).

The optical components 312 are configured to change fractions I1O and I1H when changing from the first to the second mode. In some embodiments optical components 312 may further be configured to operate in third and fourth modes, and change the fractions of light I2H, I2O, directed from the second input port to energy harvesters and output ports when changing between third and fourth modes. As the first and second modes relate to light I1, and the third and fourth modes relate to light I2, optical components 312 may operate in a combination of first or second and third or fourth modes.

The fraction, I2H, of input light I2 that optical components 312 are configured to direct into energy harvester 310 may be smaller in the fourth mode than the third mode. Conversely, optical components 312 may be configured to direct a fraction, I2O, of input light I2 to the first and fourth second ports (i.e., fraction I2O is shared across the first and second output ports), and optical components 312 are configured such that this fraction is larger in the fourth mode than the third mode. In some embodiments, the fraction, I2O1, of light I2 that is directed to the first output port in particular is increased in the fourth mode, or the fraction, I2O2, of light I2 that is directed to the second output port in particular is increased in the fourth mode. For example, an increase in light I2 directed towards an ODN coupled to a particular output port may be desirable in certain circumstances (e.g., because both ODNs are to be combined onto an OLT coupled to input port 2, because an OLT coupled to input port 1 has failed or is shut down for energy savings).

In some embodiments, optical components 312 may be switched from operating in the third mode to operating in the fourth mode in response to determining that the light I1 input to the first input port has dropped below an intensity threshold. Changing from the third mode to the fourth mode may decrease the fraction I2H of light I2 harvested (in some examples to zero), and increase the fraction I2O1 of light I2 directed to the first output port (in some examples from zero), so that an OLT coupled to the second input port 304 may serve an ODN coupled to the first output port 306.

I2O1 and I2O2 may be different in one or both of the first and second modes (e.g., because the number of ONUs coupled to the first and second output ports is different, making an uneven division of input light preferable).

Exemplary effects of switching between first and second modes on the fraction of light I1 input to input port 1 directed to the harvester and output ports are set out in the below table.

| Fraction of light I1 directed by optical components 312 | Fraction directed to an output (I1O) | | | Harvested by one or more energy harvesters (I1H) |
|---|---|---|---|---|
| | | Directed to Output 1 (I1O1) | Directed to Output 2 (I1O2) | |
| First mode | Smaller than in second mode (e.g., 50%) | Same as second mode (e.g., 50%) | Smaller than in second mode (e.g., reduced to 0%) | Larger than in second mode (e.g., 50%) |
| Second mode | Larger than in first mode (e.g., 100%) | Same as second mode (e.g., 50%) | Larger than in first mode (e.g., 50%) | Smaller than in first mode (e.g., reduced to 0%) |

Exemplary effects of switching between third and fourth modes on the fraction of light I2 input to input port 2 directed to the harvester and output ports are set out in the below table.

| Fraction of light I2 directed by optical components 312 | Fraction directed to an output (I2O) | | | Harvested by one or more energy harvesters (I2H) |
|---|---|---|---|---|
| | | Directed to Output 1 (I2O1) | Directed to Output 2 (I2O2) | |
| Third mode | Smaller than in fourth mode (e.g., 50%) | Smaller than in fourth mode (e.g., reduced to 0%) | Same as fourth mode (e.g., 50%) | Larger than in fourth mode (e.g., 50%) |
| Fourth mode | Larger than in third mode (e.g., 100%) | Larger than in third mode (e.g., 50%) | Same as third mode (e.g., 50%) | Smaller than in third mode (e.g., reduced to 0%) |

In some embodiments, optical components 300 may be configured to operate in particular combinations of first, second, third, and fourth modes. Optical components 312 may be configured to operate in first and third modes, (e.g., so that a larger portion of light input to both inputs is directed to the harvester). In some embodiments, if light is available at both input ports, this may indicate that excess light is available for harvesting, so operating in first and third modes may be beneficial. Optical components 312 may be configured to operate in second and third mode (for example, because light may only be available at the first input port in some operating conditions, so reducing the amount of that light harvested may be desirable). Similarly, optical components 312 may be configured to operate in first and fourth mode (for example, because light may only be available at the second input port in some operating conditions, so reducing the amount of that light harvested may be desirable).

The above tables do not show any effect of switching from the first mode to the second mode on the fraction of light I2O directed from the second input 304 to an output. Nor do the above tables show any effect of switching from the third mode to the fourth mode on the fraction of light I1O directed from the first input 302 to an output.

In some embodiments, the mode switch from the first mode to the second mode has an effect on the fraction of light I2O directed from the second input 304 to one or both of the first and second output ports 306, 308 and the fraction of light I2H directed from the second input 304 to the harvester 310. In some examples, switching from the first mode to the second mode increases the fraction of light I2H directed to the harvester 310 from the second input port 304, and decreases the fraction of light I2O directed to one or both of the output ports 306, 308 from the second input port 304. Increasing I2H when operating in the second mode may be desirable to allow for more rapid harvesting. If the energy of the apparatus is completely depleted while operating in the second mode (for example, because no power was available at the second input I2 for some time), the speed of harvesting energy from the second input may influence how quickly the apparatus may harvest sufficient energy to switch back to the first mode.

In addition to or alternative to the above-described effect of switching from the first mode to the second mode on fractions I2O and I2H, switching from the third mode to the fourth mode may affect the fraction of light I1O directed to one or both of the output ports, and the fraction of light I1H that is harvested. For example, switching from the third mode to the fourth mode may increase the fraction of light I1H that is directed from the first input port 302 to the one or more energy harvesters 310 and decrease the fraction of light I1O that is directed from the first input port 302 to one or both of the output ports.

In some embodiments optical components 312 may be configured such that apparatus 300 cannot be in the second and fourth modes at the same time (for example, because in some embodiments the second and fourth modes respectively decrease and increase the fraction I1H that is directed to the harvester from the first input port). In some embodiments optical components 312 may therefore be configured to, at different times, operate in: the first mode and the third mode; the first mode and the fourth mode; and the second mode and the third mode.

As discussed in connection with apparatus 200, optical components 312 may in some embodiments comprise optical switches and splitters, variable optical splitters, or another combination thereof to divide input light into fractions I1H, I1O, I2H, etc., and change the size of those fractions based on the mode(s) in which the optical components are operating.

A fraction of input light may be a fraction of the intensity of input light. In the context of this disclosure, a fraction of input light directed to an output port or energy harvester may be reduced to zero in some modes, and still be considered a fraction (i.e., a "smaller" fraction than a non-zero fraction). The optical components may be considered to be configured to direct a fraction of light input to a particular port to a particular output or the energy harvester even when no light is presently being directed into that input port.

The actual intensity of light input to the first input port may vary, including to zero, but the fraction of that light (i.e., that intensity) that is (or would otherwise be) directed by the optical components to the two or more outputs or the energy harvesters may still depend on the configuration of the optical components.

Some example apparatuses perform the function of combining multiple ODNs to a single OLT both for power savings as well as protection switching. In order to combine multiple ODNs to a single OLT, optical splitters may be used. When both ODNs are not combined, one output of the splitter is unused. In some example apparatuses this unused port is used to monitor the OLT and perform energy harvesting.

This disclosure thus proposes an apparatus (e.g., a switch module) that combines ODNs to a single OLT without any impact on the combined operation.

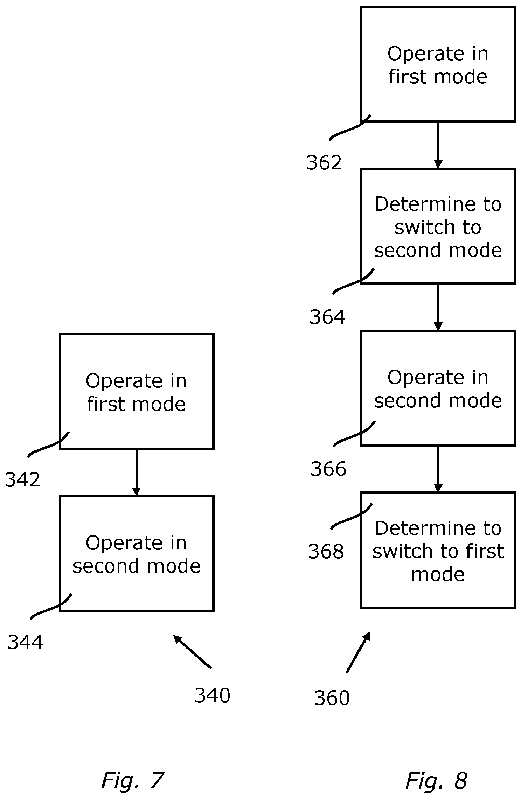

FIG. 7 is a block diagram of a method in accordance with some example embodiments, designated generally by reference numeral 340. Method 340 may in some examples be carried out at apparatus 200 or 300.

Method 340 starts at step 342.

At step 342, the apparatus is operating in a first mode. Operating in the first mode comprises harvesting using the one or more energy harvesters a first fraction of light input to the first input port; and directing a second fraction of light input to the first input port to the two or more output ports.

The method then proceeds to step 344. This may be in response to a determination made by a controller of apparatus 200 or 300, or in response to the receipt of an instruction by apparatus 200 or 300.

At step 344, the apparatus operates in a second mode. The first fraction when operating in the first mode is bigger than the first fraction when operating in the second mode; and the second fraction when operating in the first mode is smaller than the second fraction when operating in the second mode.

Carrying out this method allows the fraction of input energy harvested to be reduced. By having a higher peak fraction of optical power harvested and a lower minimum fraction of power harvested, more power can be harvested when excess power is available without as greatly affecting the performance of the system when excess power is not available. One application for this method is in an apparatus for combining ODNs for energy saving or protection switching, where optical power may be less constrained when each ODN operates with a dedicated OLT, and more constrained when each ODN is combined to one OLT.

FIG. 8 is a block diagram of a method in accordance with some example embodiments, designated generally by reference numeral 360. Method 360 may in some examples be carried out at apparatus 300. Aspects of this method that do not involve the second input may be applicable to method 340.

Method 360 starts at step 362. At step 362, the apparatus is operating in a first mode. Operating in the first mode comprises harvesting using the one or more energy harvesters a first fraction of light input to the first input port; and directing a second fraction of light input to the first input port to the two or more output ports. The second fraction comprises third and fourth fractions, which are fractions of light input to the first input port that are directed to first and second output ports respectively. In some examples the third and fourth fractions are different when operating in the first mode. For example, the fourth fraction may be smaller than the third fraction (e.g., zero or negligible), to reduce interference between a signal from an OLT coupled to the first input port and other signals received by ONUs coupled to the second output port.

At step 362 the apparatus is also operating in a third mode. Operating in the third mode comprises harvesting using the one or more energy harvesters a fifth fraction of light input to the second input port; and directing a sixth fraction of light input to the second input port to the two or more output ports. The sixth fraction comprises seventh and eighth fractions, which are fractions of light input to the second input port that are directed to first and second output ports respectively. In some examples the seventh and eighth fractions are different when operating in the third mode. For example, the eighth fraction may be smaller than the seventh fraction (e.g., zero or negligible), to reduce interference between a signal from an OLT coupled to the second input port and other signals received by ONUs coupled to the first output port.

At step 364, the apparatus determines that it should switch from operating in the first mode to a second mode.

Determining that the apparatus should switch from operating in the first mode to the second mode may comprise receiving an instruction to perform this switch (for example in the case of a non-autonomous system) or determining based on measurements or indications of light intensity obtained by sensors of the apparatus that the switch should be performed. The one or more energy harvesters may comprise these sensors. For example, the one or more energy harvesters may be used both to harvest energy and determine light intensity (e.g., by harvesting energy from light and measuring the amount of harvested energy). In one example, an energy harvester configured to harvest a fraction of light input to the second input port (at least in the third mode) may provide a measurement or indication that the light input to the second input port has dropped below a first threshold level. It may be determined (e.g., using a controller having a processor and memory, or simple logic) based on this measurement or indication that the apparatus should switch from operating in the first mode to the second mode.

At step 366, the apparatus switches from operating in the first mode to operating in the second mode. The first fraction when operating in the first mode is bigger than the first fraction when operating in the second mode; and the second fraction when operating in the first mode is smaller than the second fraction when operating in the second mode. In this example it is the fourth fraction, which makes up part of the second fraction, that increases when switching to the second mode. The detected reduction in the intensity of light at the second input port, and the resulting reduction in the intensity of light at the second output port (which may correspond to a loss of service for devices coupled to the second output port) may therefore be offset by reducing the amount of energy harvested from light input to the first input port, and increasing the fourth fraction of light (in some cases from zero or a negligible fraction) to provide more energy to the second output port.

In some examples, the third and fourth fractions may be different when operating in the second mode. For example, different intensities may be required at each output port, because of different downstream split ratios, lengths of fiber, etc.

At step 368, in a similar manner to step 364, the apparatus may determine to return to operating in the first mode (e.g., in response to receiving an instruction, or in response to determining that the amount of light received at the second input port has increased above the first threshold, or has increased above a different threshold (e.g., a higher threshold). The apparatus may then operate in the first mode as in step 362.

While the above method describes a switch from operating in the first mode to the second mode, apparatus 300 is symmetrical, and the apparatus may therefore carry out a switch from operating in the third mode to the fourth mode that mirrors the above process.

Further, while in this example the system is symmetrical (which may enable it to perform protection switching when an OLT or fiber connected to *either* of the input ports fails), a symmetrical apparatus is not essential to the invention. In some embodiments optical components 312 do not direct any fraction of light input to the second input port to the first output port. In such embodiments, light input to the second input port could still be monitored (e.g., a fraction of light input to the second port could still be directed to the harvester, and the intensity of light input to the second input port could be inferred from the amount of harvested light), and a decision to switch from the first to the second mode (and vice versa) could be based on this information. This would allow for combining ODNs on each port to an OLT on the first port (for example when an OLT or fiber on the second port fails, or when an OLT or fiber on the second port is shut down for energy savings).

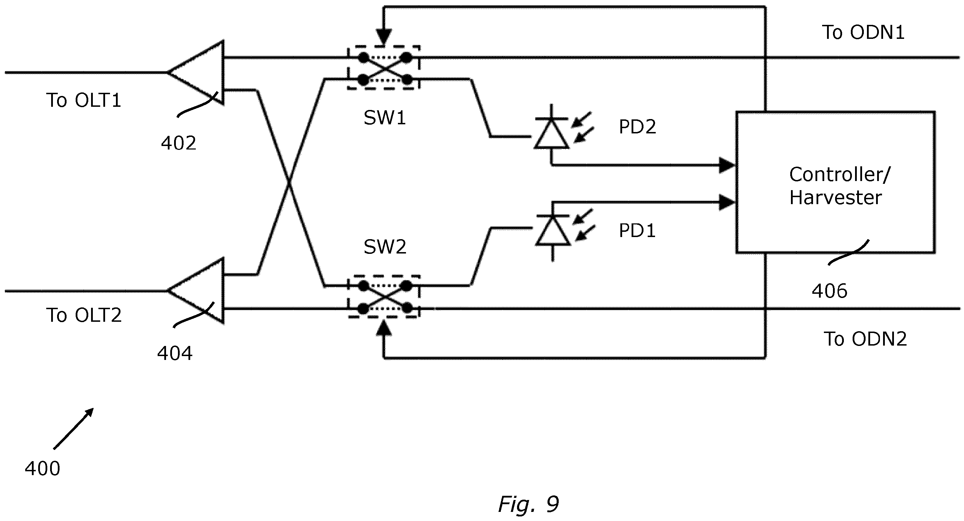

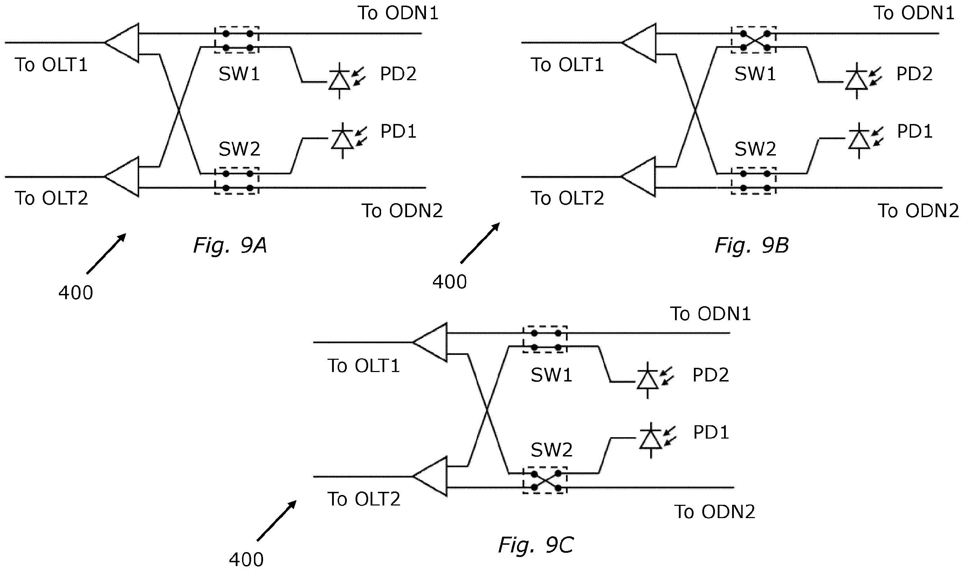

FIG. 9 is a schematic diagram of a switch module in accordance with example embodiments, designated generally by the reference numeral 400. In some embodiments switch module 400 may comprise some or all of the features of apparatuses 200 and/or 300. In some examples, features of switch module 400 may correspond to features of apparatuses 200 and/or 300, or may otherwise be incorporated into apparatuses 200 and/or 300.

The structure contains two 1x2 splitters, 402 and 404, two 2x2 optical switches, SW1 and SW2, and 2 photodiodes, PD1 and PD2, used for monitoring and harvesting. Controller 406 contains the necessary monitoring and driving functions as well as the energy harvesting and storage. Figures 9A, 9B, and 9C illustrate switch module 400 when SW1 and/or SW2 are in alternative configurations.

### Switch Module operation

In normal operation, both SW1 and SW2 are in the bar state, see FIG. 9A. Each OLT services one ODN while PD1 and PD2 monitor the downstream signal power from OLT1 and OLT2 respectively. Note that PD1 is connected to OLT1 through SW2, and vice versa for PD2.

In case no downstream power is detected from OLT1 (at PD1), either because the OLT is disabled to save power or due to a failure in the OLT/feeder, SW1 will be set in the cross state, see FIG. 9B. ODN1 and ODN2 are combined and serviced by OLT2. PD1 and PD2 are both connected to the splitter from OLT1. If downstream power from OLT1 is detected again, SW1 is put back in the bar state, and the situation resembles FIG. 9A again.

Starting again from normal operation, if no downstream power from OLT2 (at PD2) is detected, SW2 will be set in the cross state, see FIG. 9C. ODN1 and ODN2 are serviced by OLT1 while PD1 and PD2 monitor the downstream of OLT2. If downstream power from OLT2 is detected again, then SW2 is put back in the bar state, returning to the normal operation from FIG. 9A.

In the combined mode, both PDs monitor the OLT port that does not carry any downstream signal. Thus a failure of the still active OLT cannot be detected. If both OLTs fail, then service will be interrupted. If the last failing OLT restarts, the switch is already in the correct configuration so no reconfiguration is required. If the first failing OLT restarts, the switch will detect this and switch both ODNs to this OLT. Hence monitoring only one OLT port does not provide any disadvantage in this case.

### Monitoring and harvesting

To combine both ODNs to a single OLT, a 1x2 splitter may split the downstream light in 2 parts, this could be 50/50 or another ratio. This ratio may depend on the available optical budget in both ODNs, for example if one ODN can tolerate less loss than the other an asymmetric split ratio may be more beneficial. Note that extreme split ratios (such as ratios of 90/10 or less, 20/80 or less, 30/70 or less) are unlikely in a typical deployment. If one ODN can cope with a very low split ratio, then the deployment is not efficient from an operator point of view, i.e., the operator could add more ONUs to that ODN.

In combined mode, both ODNs are connected to the same optical splitter and each receive part of the downstream light. If both ODNs are separate, then one output of the 1x2 splitter is not used and part of the downstream signal would be lost. In this example, this unused output is rerouted to a PD. Given the aforementioned split ratios, a significant portion of the downstream signal is incident on the PD, e.g. 50% of all downstream power in case of a 50/50 split. Thus there may be a significant amount of optical power available for monitoring and energy harvesting.

During normal operation, i.e., when both ODNs are separate, both PDs receive a significant portion of the downstream signal from each OLT. This energy can be harvested and stored. The energy is used for continuous monitoring and to alter the switch state when required.

In combined mode, the switching module may not be able to harvest any energy (because the input to which the PDs are coupled may not be receiving light), and may need to rely on stored energy.

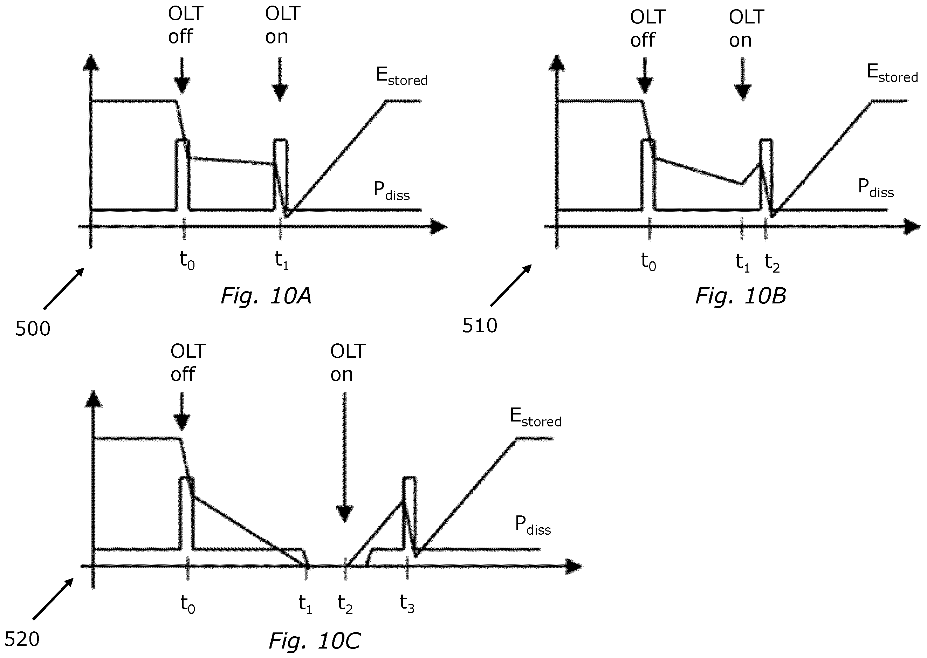

FIGS 10A, 10B, and 10C illustrate graphs of energy stored, E_{stored} and power dissipated, P_{diss}, by the exemplary switching module 400 over time in three different use cases, 500, 510, 520.

In case 500, both ODNs start separate and the switching module starts fully charged. At time t₀, one OLT is disabled. Thus a short peak in the power dissipation is present to alter the switch state. Between t₀ and t₁, the module operates in combined mode thus no power can be harvested. Energy is used as power is required for monitoring. At time t₁, said OLT is enabled again, a second peak in power dissipation is present to switch back to the separate operation. Energy can be harvested again until the switching module is fully charged.

In case 510 the setup is similar to 500. At time t₀, one OLT is disabled and the switching module slowly discharges. At time t₁, the OLT is enabled again, but there is insufficient energy left in the module to alter the switch state. There is however optical power incident on both photodiodes, such that energy can be harvested until the switch state can be altered at t₂.

In case 520, the setup is similar to 500 and 510, at time t₀, one OLT is disabled and the switching module slowly discharges. At time t₁, no energy is available anymore and the switch powers down. Depending on the optical switches used in the module, the switch state is retained without power (preferred) or not retained (not preferred). At time t₂, the OLT is enabled again, energy is harvested until a switch event is possible and normal operation is resumed.

We can calculate on the time required to gather enough energy to alter the switch state twice. Optical switches of the kind used in example switch module 400 are commercially available, and in some examples require only 4mJ to perform a switching operation. Assuming an average optical transmit power at the OLT of 1 dBm and 20 km feeder fiber (O-band 0.4 dB/km loss) between the switch and the OLT, there is -7 dBm at the switch and -10 dBm on the photodiode. Assuming a conversion efficiency of 0.2W/W, this efficiency means that 20 µW of optical power can be harvested on each photodiode. With these conservative parameters, it takes only 150 seconds to gather sufficient power for 2 switching events. If only 5 km of fiber is present, the charging time decreases to 37 seconds.

### Integration in a network and comparison of switch module 400 with switches of PON 50 and type B protection

We now compare the operation of switch module 400 with the system of previously described PON 50. We also compare with "type B" protection.

In separate operation, and assuming a 50/50 split ratio, switch module 400 introduces 3.5 dB additional loss in the PON: 3 dB from the optical splitter and 0.5 dB from losses in the optical switch. 3 dB of the downstream power is used for harvesting and monitoring.

Switch module 106 introduces the loss associated with the 2xM splitter to fan-out to all ONUs, however, this splitter is required to connect multiple ONUs to one OLT. Therefore, if the output ports of switch module 400 are to be coupled to multiple ONUs, a splitter is also required (e.g., downstream of switch module 400, or switch module 400 may incorporate this splitter). Two ports of the 2xM splitter are used for harvesting/monitoring and the switching, so 2/M of the downstream power is actually lost in the module, hence the associated loss is -10*log₁₀(1-2/M). For a typical split ratio M of 32 or 64 (i.e. 32 or 64 ONUs connected in the ODN), the loss is 0.3 or 0.15 dB respectively and 3 or 1.6% of the downstream power is used for monitoring.

In combined operation switch module 400 introduces again 3.5 dB additional loss. But no power from the active OLT is used for monitoring and harvesting, resulting in a maximum amount of power being transferred to the ONUs.

Switch module 106 provides highly asymmetric behavior. If OLT A is disabled, then the situation for the ONUs in ODN B remains unchanged, but the ONUs from ODN A are connected to a splitter port from ODN B. Thus the ONUs in ODN B experience 10*log10(1/M) additional insertion loss. For a typical M of 32 or 64, this results in 15 or 18 dB additional loss. Furthermore, still 1/M^{th} of the active OLT power is used for harvesting and monitoring, similar to separate operation.

We list an overview of the various losses and powers used for harvesting/monitoring below.

| | Switching module 400 | Switch module 106 |
|---|---|---|
| Additional insertion loss (separate operation) | 3.5 dB | -10*log₁₀(1-2/M) |
| | | M=32: 0.3 dB, M=64: 0.15 dB |
| Additional insertion loss (combined operation) | 3.5 dB | -10*log₁₀(1/M) |
| | | M=32: 15 dB, M=64: 18 dB |
| Additional loss for which the network has to be designed | 3.5 dB | -10*log₁₀(1/M) |
| | | M=32: 15 dB, M=64: 18 dB |
| DS power used for monitoring/ harvesting (separate operation) | 50% | 1/M |
| | | M=32: 3%, M=64: 1.6% |
| DS power used for monitoring/ harvesting (combined operation) | 0 % | 1/M |
| | | M=32: 3%, M=64: 1.6% |

As a network may have to be designed for worst-case conditions, that means that the worst-case insertion loss of the switch module (either in separate or in combined mode) may have to be taken into account for the network design. This means that 3.5 dB additional loss needs to be taken into account for switch module 400, while up to 15 or 18 dB loss needs to be taken into account for module 106. While module 400 harvests in separate operation (and may be configured not to harvest in combined operation), it can harvest much more energy without impact on the loss. This makes the harvesting process much more efficient. By ensuring good energy storage and low power consumption, module 400 can span longer periods of combined operation.

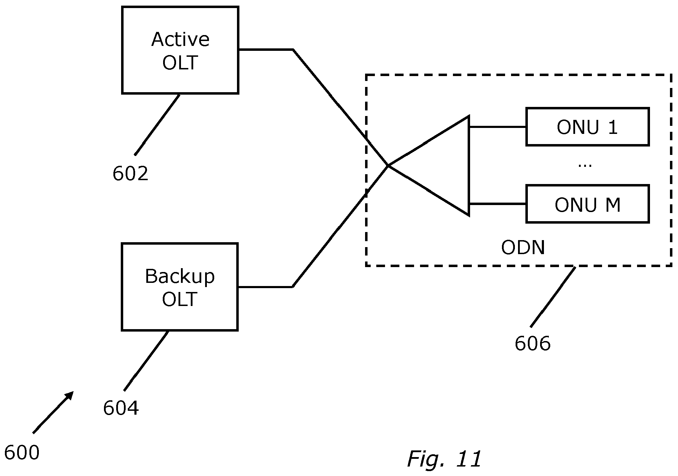

FIG. 11 illustrates schematically a PON 600 implementing a "type-B" protection scheme. PON 600 comprises active OLT 602, backup OLT 604, and ODN 606 coupling M ONUs to the OLTs using a splitter. The splitter has two input ports, and either of the active or backup OLTs may communicate with the ONUs of the ODN.

Comparing switch module 400 to a "type-B" protection scheme as shown in PON 600, it becomes apparent that the switch modules introduce additional loss. However, resources are more efficiently used. Protection type-B needs one standby OLT that needs to be purchased and requires power. Only when the active OLT fails, will the standby OLT take over, restoring full service to the ODN. Switch module 400 may use two OLTs for normal operation. When one OLT fails, the other takes over coverage of the ONUs of the ODN covered by the failing OLT in normal operation. While the service then needs to be shared among 2 ODNs, it provides a more cost-efficient network for the operator compared to the existing mechanism.

### Remote control and readout of switch module

Switch module 400 may be configured to operate fully autonomously, relying on data from photodiodes PD1/PD2 to control operation of the switches. Remote control is not therefore required for operation. However, network operators may find it meaningful to be able to configure or readout certain parameters, including:
- Putting the switch module in an autonomous mode or in a manual mode;
- Altering the switch module state (i.e. the position of the optical switches in the module) in manual mode;
- Reading out the current switch module state;
- Reading out the current optical powers on the PD; and
- Reading out the switch module health.

The simplest option is local readout, in which a technician can connect to a port on the module that connects through to the controller/harvester. Through this port, information on the state of the module could be read out and the module operation could be configured.

A second option is to readout and control the switch module is using low-power wireless signaling, thus avoiding the need to send out a technician. E.g., LTE-M, NB-IoT or LoRaWan offer very low datarates (~kbps) over long distances (>10 km) with battery lives exceeding 10 years. A separate wireless channel adds additional resilience to the link between the CO and the switch module.

A third option is to communicate over the feeder fiber.

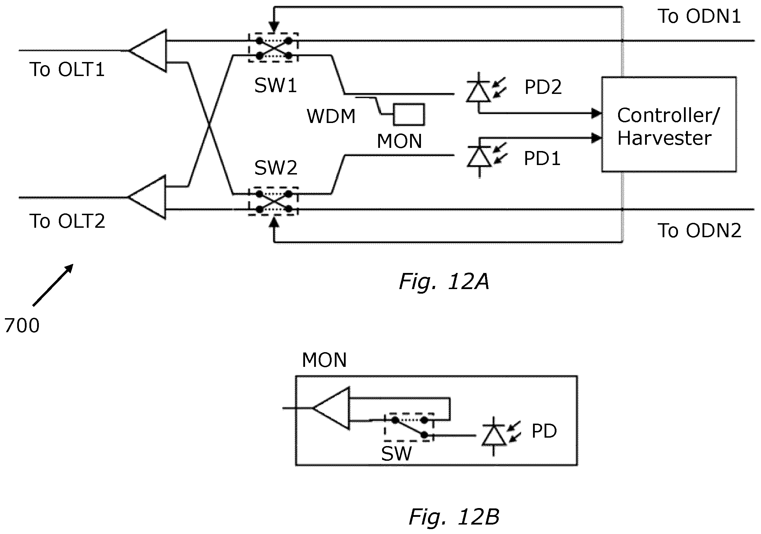

FIG. 12A is a schematic diagram of switch module 700, which may in some embodiments be a modified version of switch module 400, configured to communicate over the feeder fiber. Communication over the feeder fiber can take place at a separate wavelength. In the switch module itself, this wavelength can be split off (e.g., by demultiplexer or dichroic splitter WDM) for receipt by monitor module MON.

FIG. 12B is a schematic diagram of monitor module MON. MON can contain a photodiode for signal reception and reflective optics to transmit back to the OLT-side. Such a reflective scheme may keep the module power consumption low. At the OLT, a separate laser and receiver may be required to transmit and receive at the additional wavelength.

### Additional protection

As with any element, the optical switches inside the module can fail. One important failure mode is stiction, in which the switch state is fixed and cannot be altered anymore by external stimuli. In that case, the switch module may be stuck in either the normal or combined mode.

However, in switch module 400, one switch can be stuck in a fixed position while the module can still combine ODNs to a single OLT. In this case the OLT to which both ODNs can be combined is fixed however. Assuming that an optical switch is stuck in the bar state, then the other optical switch can toggle between bar (separate) and cross (combined) states (see Figs. 9A - 9C). Assuming that an optical switch is stuck in the cross state, then the other switch can toggle between bar (combined) and cross (separate). In the latter case, both switches are in cross (see also Fig. 9), and ODN1 is connected to OLT2 and ODN2 is connected to OLT1. Thus, energy savings are still possible, but the protection mechanism cannot protect against failure of one of the OLTs (as the ODNs can only be combined to a particular OLT when one switch has failed).

### Extension towards variable power splitters

As discussed above, the splitters could also be asymmetric (e.g., have a ratio other than 50/50, for a 1:2 port splitter). If ODN2 has much more margin than ODN1, then an asymmetric split ratio could be used to divide the excess margin equally. The excess margin could be used to allow power savings at the OLT.

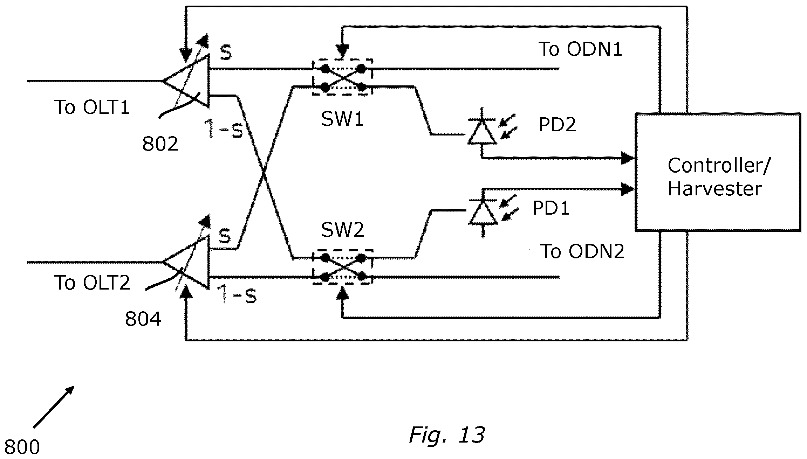

FIG. 13 is a schematic diagram illustrating a switch module in accordance with example embodiments, designated generally by reference numeral 800. Switch module 800 is similar to switch module 400, except that splitters 402 and 404 have been replaced with variable power splitters 802 and 804. Switch module 800 is a possible architecture implementing variable power splitters.

The variable power splitters can be fixed or can be adjusted by the controller to further optimize the operation of the optical switch. The power used for monitoring or harvesting in combined mode is reduced compared to separate mode, as with module 400.

### Extensions towards more than 2 ODNs

To further increase the power savings, more than 2 ODNs can be combined to a single OLT. Similarly, a protection mechanism covering more than 2 ODNs allows to protect against simultaneous failures of more than 2 OLTs or feeder fibers.

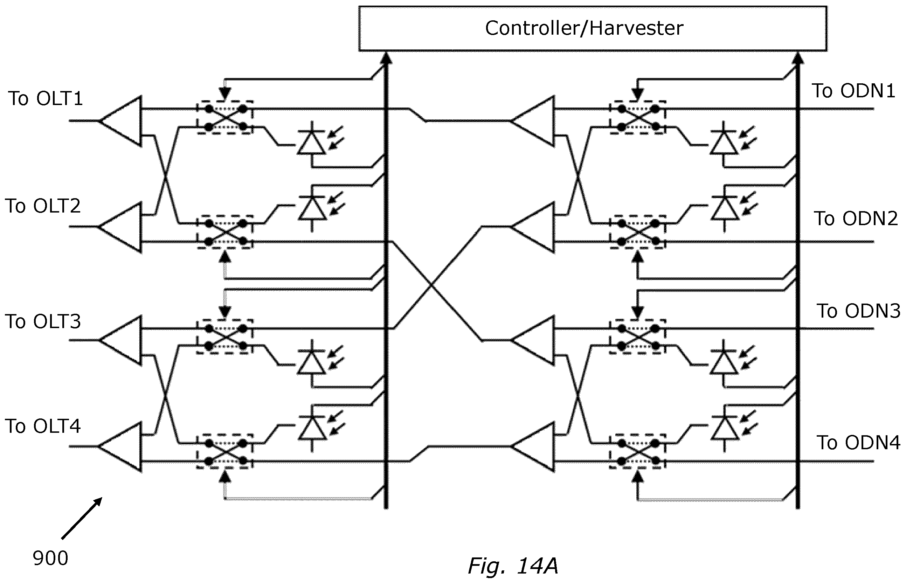

FIG. 14A is a schematic diagram illustrating a switch module in accordance with example embodiments, designated generally by reference numeral 900.

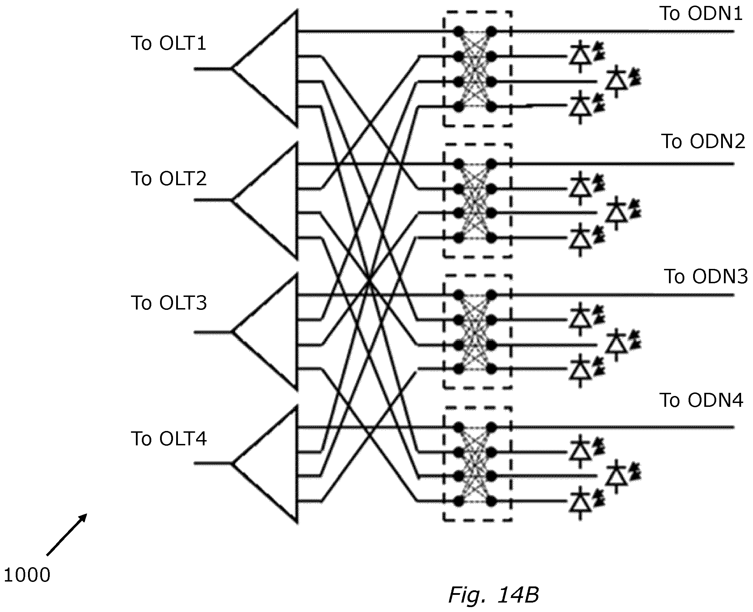

FIG. 14B is a schematic diagram illustrating a switch module in accordance with example embodiments, designated generally by reference numeral 1000.

Switching modules 900 and 1000 implement two possible ways of adapting switch module 400 to combine more than two ODNs to the same OLT/protect against two simultaneous failures of OLTs or feeder fibers.

A first possibility is to cascade the base structure from Fig. 9 as shown in module 900. Notably, there is a crossing in the center and the controller/harvester is shared between switches/photodiodes. This allows the controller to optimize switch operation and energy harvesting. The insertion loss increases to 7 dB (2x3 dB from the splitters and 2x0.5 dB from the optical switches) in this case. This switch module allows the following combinations:
- All 4 ODNs to a single OLT;
- 3 ODNs to a single OLT, the other ODN routed to another OLT;
- Combining 2 ODNs to a single OLT and combining the 2 remaining ODNs to another OLT;
- Combining 2 ODNs to a single OLT and routing the 2 remaining ODNs each to a single OLT; and
- Routing the 4 ODNs each to another OLT.

In all cases, except the 4 ODNs combined to a single OLT, limitations apply to which OLT ODNs can be combined and routed. Examples of these limitations are:
- If 3 ODNs are combined to OLT1 or OLT2, then the remaining ODN can only be routed to OLT3 or OLT4;
- If 2 ODNs are combined to OLT1 or OLT2, then the 2 remaining ODNs can only be combined or routed to OLT3 or 4; and
- If no ODNs are combined, only rerouted to other OLTs, then ODN1 and ODN3 can never be routed to OLT1 and OLT2.

These limitations only impact the OLTs that can be used for combining multiple ODNs, they do not have an impact on amount of failures that the protection mechanism can handle. Here, up to 3 OLTs or feeder fibers can fail simultaneously.

As second possibility is shown in module 1000. By using 1xM splitters and MxM switches, all possible combinations listed above are possible, without any limitations. However, the total amount of interconnects is much larger.

Combining multiple ODNs requires higher split ratios which introduces more loss in the network. Optical amplification may be required to overcome this loss. However, insufficient power can be harvested at the switch to power an optical amplifier, and including an external wired power source for an amplifier would make deployment in the field less convenient. Thus, low split ratios may be used to reduce losses, and avoid the need for optical amplification.

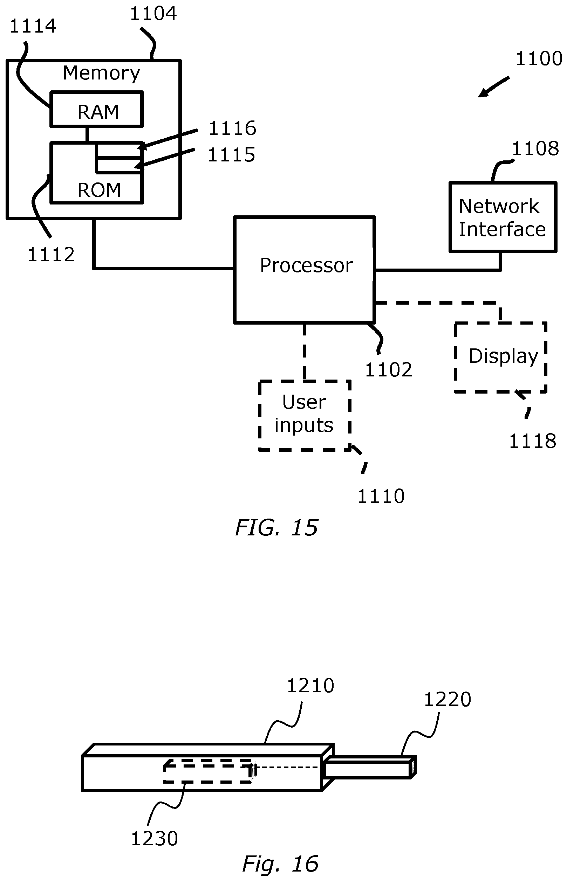

For completeness, FIG. 15 is a schematic diagram of components of one or more of the example embodiments described previously, which hereafter are referred to generically as a processing system 1100. The processing system 1100 may, for example, be comprised by the device referred to in the claims below.

The processing system 1100 may have a processor 1102, a memory 1104 closely coupled to the processor and comprised of a Random Access Memory (RAM) 1114 and a Read Only Memory (ROM) 1112, and, optionally, a user input 1110 and a display 1118. The processing system 1100 may comprise one or more network/apparatus interfaces 1108 for connection to a network/apparatus, e.g., a modem which may be wired or wireless. The network/apparatus interface 1108 may also operate as a connection to other apparatus such as device/apparatus which is not network side apparatus. Thus, direct connection between devices/apparatus without network participation is possible.

The processor 1102 is connected to each of the other components in order to control operation thereof.

The memory 1104 may comprise a non-volatile memory, such as a hard disk drive (HDD) or a solid-state drive (SSD). The ROM 1112 of the memory 1104 stores, amongst other things, an operating system 1115 and may store software applications 1116. The RAM 1114 of the memory 1104 is used by the processor 1102 for the temporary storage of data. The operating system 1115 may contain code which, when executed by the processor implements aspects of methods 340 and 360 described above. Note that in the case of small device/apparatus the memory can be most suitable for small size usage i.e., not always a hard disk drive (HDD) or a solid state drive (SSD) is used.

The processor 1102 may take any suitable form. For instance, it may be a microcontroller, a plurality of microcontrollers, a processor, or a plurality of processors.

The processing system 1100 may be a standalone computer, a server, a console, or a network thereof. The processing system 1100 and needed structural parts may be all inside device/apparatus such as IoT device/apparatus i.e., embedded to very small size.

In some example embodiments, the processing system 1100 may also be associated with external software applications. These may be applications stored on a remote server device/apparatus and may run partly or exclusively on the remote server device/apparatus. These applications may be termed cloud-hosted applications. The processing system 1100 may be in communication with the remote server device/apparatus in order to utilize the software application stored there.

FIG. 16 shows a tangible media, in the form of a removable memory unit 1210, storing computer-readable code which when run by a computer may perform methods according to example embodiments described above. The removable memory unit 1210 may be a memory stick, e.g., a Universal Serial Bus (USB) memory stick, having internal memory 1230 storing the computer-readable code. The internal memory 1230 may be accessed by a computer system via a connector 1220. Of course, other forms of tangible storage media may be used, as will be readily apparent to those of ordinary skilled in the art. Tangible media can be any device/apparatus capable of storing data/information which data/information can be exchanged between devices/apparatus/network.

Embodiments of the present invention may be implemented in software, hardware, application logic or a combination of software, hardware, and application logic. The software, application logic and/or hardware may reside on memory, or any computer media. In an example embodiment, the application logic, software, or an instruction set is maintained on any one of various conventional computer-readable media. In the context of this document, a "memory" or "computer-readable medium" may be any non-transitory media or means that can contain, store, communicate, propagate, or transport the instructions for use by or in connection with an instruction execution system, apparatus, or device, such as a computer.

Reference to, where relevant, "computer-readable medium", "computer program product", "tangibly embodied computer program" etc., or a "processor" or "processing circuitry" etc. should be understood to encompass not only computers having differing architectures such as single/multi-processor architectures and sequencers/parallel architectures, but also specialised circuits such as field programmable gate arrays (FPGA), application specific integrated circuits (ASIC), signal processing devices/apparatus and other devices/apparatus. References to computer program, instructions, code etc. should be understood to express software for a programmable processor firmware such as the programmable content of a hardware device/apparatus as instructions for a processor or configured or configuration settings for a fixed function device/apparatus, gate array, programmable logic device/apparatus, etc.

If desired, the different functions discussed herein may be performed in a different order and/or concurrently with each other. Furthermore, if desired, one or more of the above-described functions may be optional or may be combined. Similarly, it will also be appreciated that the flow diagrams of Figures 7 and 8 are examples only and that various operations depicted therein may be omitted, reordered and/or combined.

It will be appreciated that the above-described example embodiments are purely illustrative and are not limiting on the scope of the invention. Other variations and modifications will be apparent to persons skilled in the art upon reading the present specification.

Moreover, the disclosure of the present application should be understood to include any novel features or any novel combination of features either explicitly or implicitly disclosed herein or any generalization thereof and during the prosecution of the present application or of any application derived therefrom, new claims may be formulated to cover any such features and/or combination of such features.

Although various aspects of the invention are set out in the independent claims, other aspects of the invention comprise other combinations of features from the described example embodiments and/or the dependent claims with the features of the independent claims, and not solely the combinations explicitly set out in the claims.

It is also noted herein that while the above describes various examples, these descriptions should not be viewed in a limiting sense. Rather, there are several variations and modifications which may be made without departing from the scope of the present invention as defined in the appended claims.

## Claims

1. An optical apparatus comprising a first input port, two or more output ports, one or more energy harvesters, and one or more optical components, the one or more optical components being configured to:
direct a first fraction of light input to the first input port to the one or more energy harvesters, wherein the one or more energy harvesters are configured to harvest energy directed to the energy harvesters by the one or more optical components;
direct a second fraction of light input to the first input port to the two or more output ports;
operate in a first mode; and
operate in a second mode, wherein:
the first fraction when operating in the first mode is bigger than the first fraction when operating in the second mode; and
the second fraction when operating in the first mode is smaller than the second fraction when operating in the second mode.

2. The optical apparatus of claim 1, wherein:
the two or more output ports comprise at least a first output port and a second output port;
the second fraction of light input to the first input port comprises at least a third and fourth fraction of light input to the first input port; and
the one or more optical components are configured to:
direct the third fraction of light input to the first input port to the first output port; and
direct the fourth fraction of light input to the first input port to the second output port, wherein the fourth fraction when operating in the first mode is smaller than the fourth fraction when operating in the second mode.

3. The optical apparatus of claim 2, wherein, at least when operating in the second mode, the third fraction is different from the fourth fraction.

4. The optical apparatus of any of claims 1-3, further comprising a second input port, wherein the one or more optical components are further configured to:
direct a fifth fraction of light input to the second input port to the one or more energy harvesters;
direct a sixth fraction of light input to the second input port to the two or more output ports;
operate in a third mode; and
operate in a fourth mode, wherein:
wherein the fifth fraction when operating in the third mode is bigger than the fifth fraction when operating in the fourth mode; and
wherein the sixth fraction when operating in the third mode is smaller than the sixth fraction when operating in the fourth mode.

5. The optical apparatus of claim 4, wherein the sixth fraction of light input to the second input port comprises at least a seventh and eighth fraction of light input to the second input port, and the one or more optical components are configured to:
direct the seventh fraction of light input to the second input port to the first output port, wherein the seventh fraction when operating in the third mode is smaller than the seventh fraction when operating in the fourth mode; and
direct the eighth fraction of light input to the second input port to the second output port.

6. The optical apparatus of claim 5, wherein, at least when operating in the fourth mode, the seventh fraction is different from the eighth fraction.

7. The optical apparatus of any of claims 4-6, wherein the one or more optical components are configured to operate in one or more of:
the first mode and the third mode;
the first mode and the fourth mode; and
the second mode and the third mode.

8. The optical apparatus of claim 7, wherein the one or more optical components are configured to:
switch between: operating in the first mode and the third mode; and operating in the first mode and the fourth mode;
switch between: operating in the first mode and the third mode; and operating in the second mode and the third mode; or
switch between: operating in the first mode and the third mode; operating in the first mode and the fourth mode; and operating in the second mode and the third mode.

9. The optical apparatus of claim 8, wherein the optical apparatus comprises a receiver configured to receive one or more control signals, and wherein the one or more optical components are configured to perform the switching responsive to receiving the one or more control signals.

10. The optical apparatus of claim 8, wherein the optical apparatus comprises:
one or more sensors configured to obtain an indication of the intensity of the light input to the first input port; and
one or more sensors configured to obtain an indication of the intensity of the light input to the second input port, wherein the one or more optical components are configured to:
responsive to obtaining an indication that the intensity of the light input to the first input port has decreased below a threshold, switch from operating in the first mode and third mode to operating in the first mode and fourth mode, and
responsive to obtaining an indication that the intensity of the light input to the second input port has decreased below a threshold, switch from operating in the first mode and third mode to operating in the second mode and third mode.

11. The optical apparatus of claim 10, wherein the one or more optical components are configured to:
responsive to obtaining an indication that the intensity of the light input to the first input port has increased above a threshold, switch from operating in the first mode and fourth mode to operating in the first mode and third mode, and
responsive to obtaining an indication that the intensity of the light input to the second input port has increased above a threshold, switch from operating in the second mode and third mode to operating in the first mode and third mode.

12. The optical apparatus of claim 10 or claim 11, wherein the one or more energy harvesters comprise first and second energy harvesters, wherein the first energy harvester is configured to harvest energy from the first input port in at least the first mode and the second energy harvester is configured to harvest energy from the second input port in at least the third mode, and wherein the one or more sensors comprise a first sensor configured to determine an intensity of light input to the first input port from an amount of energy harvested by the first energy harvester, and a second sensor configured to determine an intensity of light input to the second input port from an amount of energy harvested by the second energy harvester.

13. The optical apparatus of any preceding claim, wherein the one or more optical components comprise at least one optical splitter and at least one optical switch, wherein the optical splitter has at least one input and at least two outputs, wherein the first input port is optically coupled the input of the optical splitter, and wherein the optical switch optically couples a controllable number of outputs of the optical splitter to the one or more harvesters and two or more output ports to control the size of the first and second fractions.

14. The optical apparatus of any preceding claim, wherein the one or more optical components comprise at least one variable optical splitter, wherein the variable optical splitter has at least one input and at least two outputs, and the fraction of light input to the input that is output to respective outputs is controllable, wherein the first input port is optically coupled to the variable optical splitter input, and wherein variable optical splitter outputs are optically coupled to the one or more harvesters and two or more output ports to control the size of the first and second fractions by controlling the variable optical splitter.

15. A method of operating an optical apparatus, the optical apparatus comprising a first input port, two or more output ports, one or more energy harvesters, and one or more optical components, the method comprising:
operating in a first mode comprising: harvesting using the one or more energy harvesters a first fraction of light input to the first input port; and directing a second fraction of light input to the first input port to the two or more output ports; and
operating in a second mode, wherein the first fraction when operating in the first mode is bigger than the first fraction when operating in the second mode; and the second fraction when operating in the first mode is smaller than the second fraction when operating in the second mode.
